# FASCICULE DE BREVET EUROPEEN

(11) **EP 3 192 739 B1**
(45) Date de publication et mention de la délivrance du brevet: **15.05.2019**
(21) Numéro de dépôt: 17150611.6
(22) Date de dépôt: 09.01.2017
(51) Int. Cl.: B64C 39/08, B64D 27/24, B64C 39/02

(54) **DRONE VOLANT COMPRENANT DEUX AILES PORTANTES EN TANDEM SUR LESQUELLES SONT COUPLÉES DES CELLULES PHOTOVOLTAÏQUES**
FLUG-DROHNE, DIE ZWEI TRAGFLÜGEL IN TANDEM-ANORDNUNG UMFASST, AUF DENEN FOTOVOLTAIKZELLEN ANGEBRACHT SIND
FLYING DRONE COMPRISING TWO FOILS IN TANDEM ON WHICH PHOTOVOLTAIC CELLS ARE COUPLED

(30) Priorité: 13.01.2016 FR 1650242
(43) Date de publication de la demande: 19.07.2017
(73) Titulaire: David, Benjamin, 44420 Piriac Sur Mer (FR)
(72) Inventeur: David, Benjamin, 44420 Piriac Sur Mer (FR)
(74) Mandataire: Gicquel, Frédéric

(56) Documents cités:
- CN-A- 101 758 926
- CN-A- 103 895 864
- CN-A- 104 890 859
- CN-U- 204 021 254
- DE-A1- 19 716 650
- DE-A1-102012 017 533
- DE-C- 655 359
- JP-A- H 045 198
- US-A1- 2011 315 809
- US-A1- 2015 344 134

## Description

Le domaine de l'invention est celui de la conception et de la fabrication de drones volants.

L'invention concerne plus particulièrement les drones volants à voilure fixe alimentés en énergie par des cellules photovoltaïques.

Les drones volants à voilure fixe correspondent à des drones entraînés par des moyens moteurs, et qui comprennent une voilure dont la portance, à partir d'une vitesse prédéterminée de déplacement du drone, permet à ce dernier de voler. Ces drones volants dits « à voilure fixe » s'opposent aux drones volants « à voilure tournante » dont la sustentation est assurée par un ou plusieurs rotors.

Des dispositifs volants de ce type peuvent être de petite ou de grande taille, et être propulsés par différents types de motorisations.

Les drones équipés d'une motorisation utilisant de l'électricité ont pour avantages de disposer d'une autonomie importante. L'art antérieur propose par exemple de tels drones destinés à voler longtemps à une altitude haute ou intermédiaire.

Pour réaliser l'alimentation électrique de ces drones, des accumulateurs électriques et des cellules photovoltaïques sont utilisées. Le jour, les cellules photovoltaïques sont dédiées à l'alimentation électrique du drone et au rechargement des accumulateurs électriques. La nuit, les accumulateurs électriques prennent le relai et permettent au drone de continuer de voler jusqu'à ce que les cellules photovoltaïques soient de nouveau ensoleillées.

Pour améliorer l'autonomie et la capacité d'emport d'un drone, l'art antérieur a proposé des solutions visant à optimiser la capacité d'un drone à emmagasiner de l'énergie électrique à partir de l'ensoleillement

On retrouve ainsi des drones présentant un fuselage unique et une aile portante, recouverte de cellules photovoltaïques, d'une envergure très importante par rapport à la longueur du drone.

On retrouve aussi des drones présentant une pluralité de fuselages, disposés de manière parallèle, soutenant une aile portante de grande envergure, les fuselages et l'aile portante étant tous recouverts de cellules photovoltaïques.

On retrouve encore des drones volants présentant des organes surdimensionnés de manière à augmenter la surface du drone pouvant être recouverte de cellules photovoltaïques. En effet, on retrouve des drones volants présentant un empennage arrière surdimensionné.

Ces différentes solutions permettent d'augmenter la surface d'un avion sur laquelle peuvent être couplées des cellules photovoltaïques. Cependant, ces solutions induisent de multiples inconvénients.

Dans un premier temps, on retrouve des architectures de drones provoquant de fortes contraintes structurelles lorsque le drone est en vol. Ces contraintes structurelles peuvent résulter d'une envergure démesurée d'une aile portante et nécessiter le recours à des matériaux composites de haute technicité. Les contraintes structurelles de ces architectures s'accompagnent alors d'un encombrement important et d'un coût élevé de fabrication des drones volants.

Dans un second temps, on retrouve des architectures qui entraînent un mauvais placement des cellules photovoltaïques par rapport à des éléments structuraux du drone volant, réduisant en conséquence l'ensoleillement global des cellules photovoltaïques couplées sur ce drone. Par exemple, on remarque que les architectures employant de multiples fuselages peuvent créer des zones d'ombres sur des surfaces du drone pourvues de cellules photovoltaïques. De telles architectures nuisent donc à la capacité des cellules photovoltaïques à être ensoleillées, alors que ces mêmes cellules photovoltaïques ajoutent du poids au drone volant. On constate ainsi une dégradation des performances et de l'endurance d'un drone volant conçu selon une de ces architectures.

On connaît par exemple le drone volant décrit dans le document de brevet publié sous le numéro CN 104 890 859 A. Ce drone volant comprend un fuselage présentant plusieurs corps, des moyens de propulsion électriques, une première aile portante et une deuxième aile portante avec des surfaces supérieures essentiellement recouvertes de cellules photovoltaïques.

L'invention a notamment pour objectif de pallier ces inconvénients de l'art antérieur.

Plus précisément, l'invention a pour objectif de proposer un drone volant à voilure fixe et à alimentation électrique par cellules photovoltaïques dont les performances en endurance sont optimisées par rapport à ce qui est permis par l'art antérieur.

L'invention a aussi pour objectif de proposer un tel drone volant dont l'encombrement est limité par rapport à des drones d'autonomie équivalente proposés par l'art antérieur.

L'invention a encore pour objectif de proposer un tel drone volant qui dispose d'une architecture entrainant peu de contraintes structurelles et optimisant sa capacité à emmagasiner de l'énergie électrique par l'intermédiaire de cellules photovoltaïques.

Ces objectifs, ainsi que d'autres qui apparaîtront par la suite, sont atteints par l'invention qui a pour objet un drone volant selon la revendication 1.

Les deux ailes portantes du drone volant selon l'invention ont notamment, vues du dessus, une forme sensiblement identique.

Ces ailes portantes assument plus précisément une position désignée par l'expression « ailes en tandem ».

Un tel drone volant présente des performances d'endurance en vol optimisées par rapport à ce qui est permis par l'art antérieur. En effet, le drone selon l'invention a une surface recouverte par des cellules photovoltaïques qui est plus importante que celles de drones proposés par l'art antérieur présentant une unique aile portante ayant une envergure équivalente à celle des ailes portante du drone selon l'invention.

Plus précisément, cette architecture permet d'augmenter l'endurance en vol du drone par l'augmentation de sa capacité à capter de l'énergie solaire pour alimenter ses moyens de propulsion et recharger ses batteries en journée, quand les cellules photovoltaïques sont ensoleillées. Cette augmentation de la capacité à capter de l'énergie est notamment permise par la disposition en tandem des ailes portantes qui limite des problèmes d'ombrage d'une aile portante sur l'autre aile portante.

Cette optimisation des performances en endurance du drone est couplée à une forme du drone qui limite son encombrement et qui permet de limiter l'apparition de contraintes structurelles.

En effet, cette configuration d'ailes en tandem permet de limiter l'envergure du drone. Ainsi, un drone selon l'invention peut porter autant de cellules photovoltaïques, tout en présentant une envergure et un encombrement inférieurs, qu'un drone de l'art antérieur qui a une superficie totale d'une unique aile portante comparable à la superficie totale des ailes portantes du drone selon l'invention.

Aussi, cette limitation de l'envergure du drone permet d'éviter les contraintes structurelles induites par la présence d'une unique aile portante d'envergure importante.

De ce fait, le drone volant selon l'invention a moins besoin d'avoir recours à des matériaux spécifiques et onéreux présentant un poids faible et étant aptes à supporter des contraintes structurelles importantes.

En outre, la face supérieure et les faces latérales ont chacune une exposition vers le ciel et contribuent à la génération d'électricité par l'intermédiaire des cellules photovoltaïques qui les recouvrent.

Selon une caractéristique avantageuse, les ailes portantes ont une forme dite « droite ».

Le drone volant présente ainsi une architecture adaptée aux vitesses subsoniques.

Selon une autre caractéristique avantageuse, la première aile portante présente, vue de face, un dièdre négatif ou positif, et la deuxième aile portante présente, vue de face, un dièdre positif.

Cette conception permet d'augmenter la stabilité en vol du drone volant.

Préférentiellement, la deuxième aile portante est couplée sur le fuselage par l'intermédiaire d'un bras de liaison en V, la deuxième aile portante étant située au-dessus du fuselage.

Un tel bras de liaison permet de laisser passer l'air entre le fuselage et la deuxième aile portante située en position supérieure par rapport au fuselage. De la sorte, l'aérodynamisme du drone est amélioré, et la trainée du drone est diminuée tout en assurant la rigidité structurelle de l'aile supérieure sur le fuselage.

Avantageusement, selon un exemple ne faisant pas partie de l'invention, une plaque de cellules photovoltaïques est couplée et centrée sur la face supérieure du fuselage, la plaque de cellules photovoltaïques s'étendant en longueur sur essentiellement toute la longueur du fuselage.

Selon un exemple ne faisant pas partie de l'invention, la plaque de cellules photovoltaïques a une largeur égale à la largeur du fuselage.

Selon un autre exemple ne faisant pas partie de l'invention, la plaque de cellules photovoltaïques a une largeur supérieure à la largeur du fuselage, et la plaque de cellules photovoltaïques a un profil symétrique présentant une portance nulle lorsque l'angle d'incidence est nul.

Une telle plaque augmente la capacité du drone volant à récupérer le maximum d'éclairement solaire. Son profil est tel que sa portance et ainsi sa trainée induite sont réduites au maximum quand l'angle d'incidence est nul.

Selon un autre mode de réalisation, le drone volant comprend au moins une paire de plaques profilées de cellules photovoltaïques distinctes des ailes portantes, les plaques profilées de chaque paire étant couplées sur le fuselage et réparties symétriquement de chaque côté du fuselage, et chaque plaque profilée a un profil cambré présentant, à une vitesse et une altitude de croisière prédéterminées du drone volant, une portance qui est apte à compenser le poids de ladite plaque profilée lorsque l'angle d'incidence est nul.

Grâce à de telles plaques profilées, le drone volant dispose de cellules photovoltaïques supplémentaires dont le support (la plaque profilée) permet de compenser son poids grâce à sa forme aérodynamique quand le drone volant est à son altitude et à sa vitesse de croisière.

Avantageusement, la ou les paires de plaques profilées sont décalées en hauteur sur le fuselage par rapport à la première aile portante et à la deuxième aile portante.

De cette manière, les turbulences générées par les ailes portantes et/ou les plaques profilées ont un impact minimisé sur les structures situées en aval du flux d'air.

Préférentiellement, le drone volant comprend deux paires de plaques profilées de cellules photovoltaïques distinctes des ailes portantes, dont une paire avant et une paire arrière, et :
- la paire avant est située entre la deuxième aile portante et la première aile portante située sur une extrémité avant du fuselage;
- la paire arrière est située entre la deuxième aile portante et une extrémité arrière du fuselage.

En utilisant quatre plaques profilées, l'ombrage des plaques profilées par la deuxième aile portante est minimisé.

Accessoirement, dans cette configuration, la paire avant et la paire arrière peuvent être décalées en hauteur l'une par rapport à l'autre de manière à minimiser l'impact des turbulences provoquées par la paire avant sur la paire arrière.

Selon une caractéristique avantageuse, le fuselage comporte un compartiment pour une charge utile situé à une extrémité avant du fuselage, devant les ailes portantes.

La charge utile peut par exemple être une caméra. Le compartiment peut alors consister en une cellule transparente positionnée dans le prolongement du fuselage de manière à être le plus aérodynamique possible.

Aussi, grâce à cette disposition en devant des deux ailes portantes, la structure du fuselage peut être optimisée pour soutenir plus solidement les forces de torsions s'exerçant entre les deux ailes portantes. Ainsi, il n'y a pas de discontinuité structurelle, dans la section du fuselage située entre les deux ailes portantes, résultant de l'aménagement d'un compartiment apte à intégrer une charge utile.

Cette disposition permet également de positionner la charge utile devant le centre de portance du drone volant, améliorant ainsi la stabilité en vol du drone.

Selon un mode de réalisation particulier, le drone volant comprend au moins une face inférieure portant des cellules photovoltaïques.

Grâce à de telles cellules photovoltaïques présentées par au moins une face inférieure du drone volant, l'albédo terrestre (luminosité réfléchie par la surface de la terre) peut être capté. Le drone ainsi pourvu est alors particulièrement adapté à des missions de longues durées dans des zones où il y a de la neige ou de la glace (la neige ou la glace constituant des surfaces ayant une forte capacité à réfléchir l'énergie lumineuse).

D'autres caractéristiques et avantages de l'invention apparaîtront plus clairement à la lecture de la description suivante de plusieurs modes de réalisation préférentiels de l'invention, donnés à titre d'exemples illustratifs et non limitatifs, et des dessins annexés parmi lesquels :
- les figures 1 et 2 sont des représentations schématiques d'un premier mode de réalisation du drone volant selon l'invention, respectivement selon une vue de côté et une vue de face ;
- la figure 3 est une représentation schématique d'une section transversale d'un premier type de fuselage d'un drone volant selon l'invention ;
- la figure 4 est une représentation schématique du premier mode de réalisation du drone volant selon l'invention, selon une vue du dessus ;
- la figure 5 est une représentation schématique d'une section transversale d'un second type de fuselage d'un drone volant selon un exemple ne faisant pas partie de l'invention;
- les figures 6 et 7 sont des représentations schématiques d'un exemple de drone volant ne faisant pas partie de l'invention, respectivement selon une vue de face et une vue de dessus ;
- les figures 8, 9 et 10 sont des représentations schématiques d'un deuxième mode de réalisation du drone volant selon l'invention, respectivement selon une vue de côté, une vue de face et une vue du dessus.

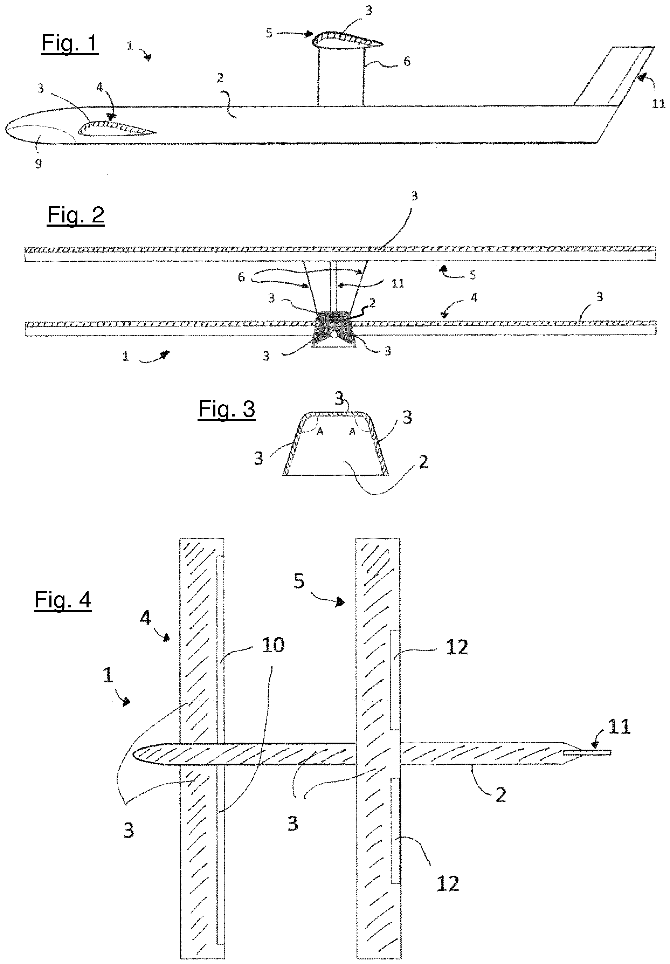

Tel qu'illustré par les figures 1, 2, 4, 6 à 10, le drone volant 1 selon l'invention comprend un fuselage 2 et deux ailes portantes disposées en tandem. Ce fuselage est mono corps et de forme oblongue.

Plus précisément, le drone volant 1 comprend une première aile portante 4 et une deuxième aile portante 5. Ces deux ailes portantes ont une forme sensiblement identique. En effet, la première aile portante présente une surface supérieure définie par une envergure et une superficie qui sont sensiblement identiques à l'envergure et la superficie définies par la surface supérieure de la deuxième aile portante. Ces deux ailes portantes sont décalées le long du fuselage et en hauteur l'une par rapport à l'autre.

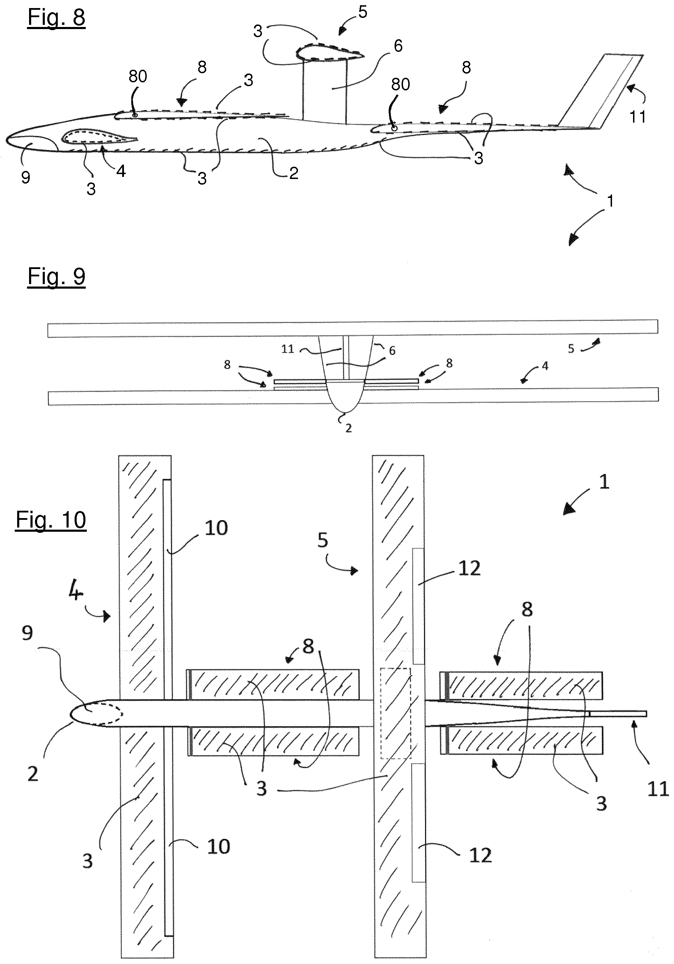

Tel qu'on peut l'observer sur les figures 1 et 8, la première aile portante 4 est notamment située sur l'extrémité avant du fuselage 2 tandis que la deuxième aile portante est sensiblement centrée sur la longueur du fuselage, au-dessus de ce fuselage.

La deuxième aile portante est notamment couplée sur le fuselage par l'intermédiaire d'un bras de liaison 6. Tel qu'illustré par les figures 2, 6 et 9, le bras de liaison est en V. Un tel bras de liaison permet à l'air de circuler plus aisément entre la deuxième paire d'aile et le fuselage.

Tel qu'on peut l'observer sur les figures 4, 7 et 10, la première aile portante 4 présente des gouvernes de profondeur 10, le fuselage 2 présente une gouverne de direction 11 située sur son extrémité arrière, et la deuxième aile portante 5 présente des ailerons 12.

Le drone volant dispose de moyens de propulsion (non représentés) alimentés au moins par des accumulateurs électriques et/ou de cellules photovoltaïques 3. Ces moyens de propulsions peuvent prendre la forme d'un ou de plusieurs moteurs électriques à hélice couplés sur le fuselage et/ou les ailes portantes.

Les cellules photovoltaïques 3 permettent au drone volant 1 d'alimenter ses moyens de propulsions et de recharger ses accumulateurs électriques quand elles sont ensoleillées.

Les ailes disposées en tandem permettent d'augmenter la surface totale du drone qui est orientée vers le haut.

Ainsi, tel qu'illustré par les figures 1, 2, 4, 6 à 10, la face supérieure de la première aile portante 4 et la face supérieure de la deuxième aile portante 5 sont essentiellement recouvertes de cellules photovoltaïques 3. La configuration en tandem permet de limiter l'ombrage possible résultant de la deuxième aile portante qui est située plus en hauteur que la première aile portante par rapport au fuselage.

Le drone selon l'invention permet d'optimiser la surface totale qu'il présente et qui peut être recouverte de cellules photovoltaïques.

Ainsi, te qu'illustré par les figures 2 à 4, le fuselage 2 présente une section transversale prenant la forme d'un trapèze isocèle. La plus petite base de ce trapèze est formée par la face supérieure du fuselage 2, à partir de laquelle s'étendent les faces latérales du fuselage. Cette face supérieure et ces faces latérales du fuselage sont alors essentiellement recouvertes de cellules photovoltaïques 3.

Tel qu'on peut l'observer sur la figure 3, des angles A sont formés par la face supérieure et les faces latérales du fuselage. Ces angles A sont conçus de manière à optimiser l'ensoleillement moyen des cellules photovoltaïques 3 situées sur les faces supérieures et latérales du fuselage.

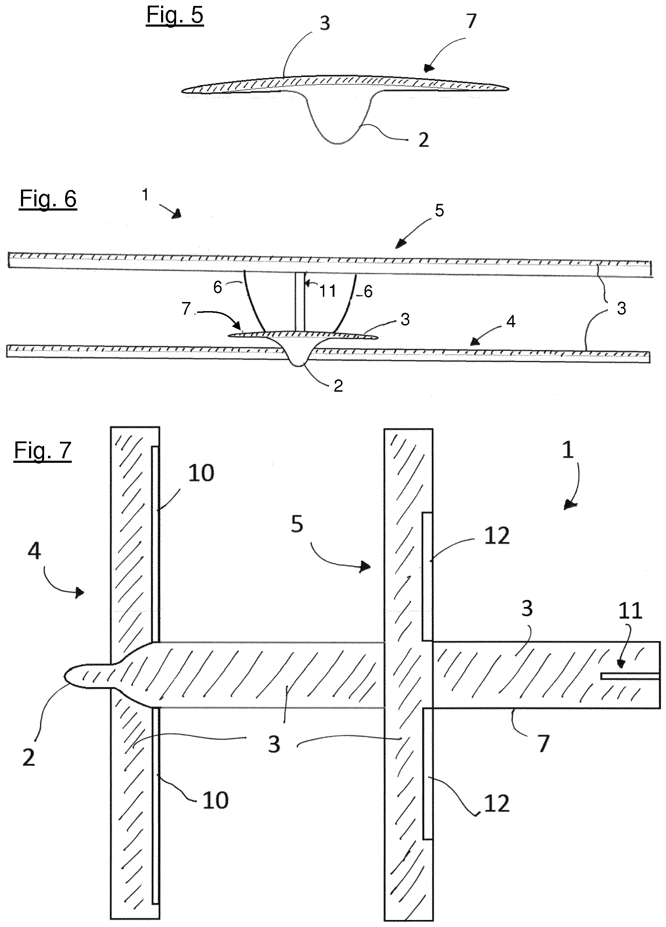

Selon un exemple ne faisant pas partie de l'invention illustré par les figures 5 à 7, le drone volant 1 comporte une plaque 7 de cellules photovoltaïques 3, couplée et centrée sur la face supérieure du fuselage 2. Cette plaque de cellules photovoltaïques s'étend en longueur sur essentiellement toute la longueur du fuselage.

Selon le présent exemple, la plaque 7 a une largeur supérieure à la largeur du fuselage 2. Cette plaque présente un profil symétrique présentant une portance nulle lorsque l'angle d'incidence est nul.

Tel qu'on peut l'observer sur la figure 6, le fuselage 2 a des faces latérales et une face inférieure conférant audit fuselage un profil transversal bombé vers le bas. Le bras de liaison 6 en V est alors situé dans le prolongement des faces latérales du fuselage. Plus précisément, le bras de liaison présente deux parties chacune couplée sur le fuselage au niveau de l'extrémité supérieure d'une face latérale, et s'étendant vers le haut à partir du fuselage, les deux parties s'écartant l'une deux l'autre en s'éloignant du fuselage. Le fuselage présente ainsi un profil transversal ayant la forme d'un U ou d'un V et le bras de liaison en V prolonge vers le haut cette forme.

De cette manière, le bras de liaison est lié plus naturellement avec le fuselage et l'aérodynamisme du drone et les contraintes structurelles s'exerçant sur le drone sont optimisés.

Selon un deuxième mode de réalisation, illustré par les figures 8 à 10, le drone volant 1 comprend deux paires de plaques profilées 8 de cellules photovoltaïques 3, distinctes des ailes portantes.

Les plaques profilées de chaque paire sont réparties symétriquement et couplées de chaque côté du fuselage.

Les plaques profilées sont notamment couplées sur le fuselage par l'intermédiaire d'axes de rotation 80 autour desquelles elles sont mobiles. Grâce à ces axes de rotation, l'angle d'incidence de chaque plaque profilée peut être modifié. Ces plaques profilées présentent plus précisément un profil cambré qui, à une vitesse et une altitude de croisière prédéterminées, confère aux plaques profilées une portance apte à compenser le poids de la plaque profilée quand l'angle d'incidence est nul.

Selon la figure 9, on observe que les paires de plaques profilées 8 sont essentiellement décalées en hauteur sur le fuselage 2 l'une par rapport à l'autre, et par rapport à la première aile portante 4 et à la deuxième aile portante 5. A partir du bas du drone volant 1, on observe successivement la première aile portante 4, une première paire de plaques profilées 8 puis une seconde paire de plaque profilée située au niveau de l'extrémité supérieure du fuselage 2 et enfin la deuxième aile portante 5 située au-dessus du fuselage.

Tel qu'on peut l'observer sur les figures 8 et 10, les deux paires de plaques profilées 8 se décomposent entre une paire avant et une paire arrière, la paire avant étant située entre la deuxième aile portante et la première aile portante, et la paire arrière étant située entre la deuxième aile portante et l'extrémité arrière du fuselage. Ainsi, tel qu'illustré par la figure 10, les surfaces supérieures des ailes portantes et des plaques profilées ne se superposent pas les unes avec les autres. Les cellules photovoltaïques 3 situées sur ces plaques profilées 8 ont ainsi moins tendance à être sous l'ombre des ailes portantes.

Enfin, selon un troisième mode de réalisation illustré par la figure 8, le drone volant 1 présente des cellules photovoltaïques 3 sur au moins une face inférieure de manière à pouvoir capter l'albédo terrestre. Plus précisément, la face inférieure du fuselage 2, les faces inférieures de la première aile portante 4, de la deuxième aile portante 5, et les faces inférieures des plaques profilées 8 sont pourvues de cellules photovoltaïques 3.

Bien entendu, ces caractéristiques peuvent être combinées ensemble de manière à augmenter la surface totale du drone volant pouvant être recouverte de cellules photovoltaïques.

Ainsi, par exemple, si le fuselage du drone volant a une section prenant la forme d'un trapèze isocèle (les faces latérales étant pourvues de cellules photovoltaïques), le drone peut alors recevoir des plaques profilées de cellules photovoltaïques. Dans ce cas, ces plaques profilées sont préférentiellement couplées dans une position basse sur les faces latérales de manière à ne pas provoquer un ombrage trop important de ces faces latérales recouvertes de cellules photovoltaïques.

Enfin, selon le mode de réalisation illustré par les figures 1 et 8, le fuselage 2 présente un compartiment 9 pour une charge utile. Ce compartiment 9 est situé sur l'extrémité avant du fuselage, en devant des ailes portantes de manière à ce que la présence du compartiment n'engendre pas de contraintes structurelles dans le fuselage entre les deux ailes portantes.

## Revendications

1. Drone volant (1) comprenant :
- un fuselage (2), la face supérieure du fuselage étant recouverte de cellules photovoltaïques (3) ;
- des moyens de propulsion alimentés au moins par des accumulateurs électriques et/ou des cellules photovoltaïques (3) ;
- une première aile portante (4) définie par une envergure et par une superficie de face supérieure, la face supérieure de la première aile portante étant recouverte de cellules photovoltaïques ;
- une deuxième aile portante (5) décalée le long du fuselage et en hauteur par rapport à la première aile portante, la face supérieure de la deuxième aile portante étant recouverte de cellules photovoltaïques,
**caractérisé en ce que** la deuxième aile portante (5) présente :
- une envergure identique à celle de la première aile portante;
- une face supérieure d'une superficie identique à celle de la première aile portante,
et **en ce que** le fuselage (2) présente une section transversale prenant la forme d'un trapèze isocèle dont la plus petite base est formée par la face supérieure du fuselage à partir de laquelle s'étendent les faces latérales du fuselage, les faces latérales du fuselage étant recouvertes de cellules photovoltaïques (3).

2. Drone volant (1) selon la revendication 1, **caractérisé en ce que** la deuxième aile portante (5) est couplée sur le fuselage (2) par l'intermédiaire d'un bras de liaison (6) en V, la deuxième aile portante étant située au-dessus du fuselage. ,

3. Drone volant (1) selon l'une quelconque des revendications 1 et 2, **caractérisé en ce qu'**il comprend au moins une paire de plaques profilées (8) de cellules photovoltaïques (3) distinctes des ailes portantes, les plaques profilées de chaque paire étant couplées sur le fuselage (2) et réparties symétriquement de chaque côté du fuselage, et **en ce que** chaque plaque profilée a un profil cambré présentant, à une vitesse et une altitude de croisière prédéterminées du drone volant, une portance qui est apte à compenser le poids de ladite plaque profilée lorsque l'angle d'incidence est nul.

4. Drone volant (1) selon la revendication 3, **caractérisé en ce que** la ou les paires de plaques profilées (8) sont décalées en hauteur sur le fuselage (2) par rapport à la première aile portante (4) et à la deuxième aile portante (5).

5. Drone volant (1) selon l'une quelconque des revendications 3 et 4, **caractérisé en ce qu'**il comprend deux paires de plaques profilées (8) de cellules photovoltaïques (3) distinctes des ailes portantes, dont une paire avant et une paire arrière,
et **en ce que** :
- la paire avant est située entre la deuxième aile portante (5) et la première aile portante (4) située sur une extrémité avant du fuselage (2) ;
- la paire arrière est située entre la deuxième aile portante et une extrémité arrière du fuselage.

6. Drone volant (1) selon l'une quelconque des revendications précédentes, **caractérisé en ce que** le fuselage (2) comporte un compartiment (9) pour une charge utile situé à une extrémité avant du fuselage, devant les ailes portantes.

7. Drone volant (1) selon l'une quelconque des revendications précédentes, **caractérisé en ce qu'**il comprend au moins une face inférieure portant des cellules photovoltaïques (3).

## Patentansprüche

1. Fliegende Drohne (1), die Folgendes umfasst:
- einen Rumpf (2), wobei die obere Fläche des Rumpfs mit fotovoltaischen Zellen (3) bedeckt ist;
- Antriebsmittel, die mindestens durch Stromspeicher und/oder fotovoltaische Zellen (3) versorgt sind;
- einen ersten Tragflügel (4), der durch eine Spannweite und durch eine Oberfläche der oberen Fläche definiert ist, wobei die obere Fläche des ersten Tragflügels mit fotovoltaischen Zellen bedeckt ist;
- einen zweiten Tragflügel (5), der entlang des Rumpfs und in Höhe bezüglich des ersten Tragflügels versetzt ist, wobei die obere Fläche des zweiten Tagflügels mit fotovoltaischen Zellen bedeckt ist,
**dadurch gekennzeichnet, dass** der zweite Tragflügel (5) Folgendes aufweist:
- eine Spannweite, die mit der des ersten Tragflügels identisch ist;
- eine obere Fläche mit einer Oberfläche, die mit der des ersten Tagflügels identisch ist,
und dadurch, dass der Rumpf (2) einen Querschnitt aufweist, der die Form eines gleichschenkeligen Trapezes annimmt, dessen kleinere Basis durch die obere Fläche des Rumpfs gebildet ist, von welcher ausgehend sich die seitlichen Flächen des Rumpfs erstrecken, wobei die seitlichen Flächen des Rumpfs mit fotovoltaischen Zellen (3) bedeckt sind.

2. Fliegende Drohne (1) nach Anspruch 1, **dadurch gekennzeichnet, dass** der zweite Tragflügel (5) auf dem Rumpf (2) über einen Verbindungsarm (6) in V gekoppelt ist, wobei der zweite Tragflügel oberhalb des Rumpfs liegt.

3. Fliegende Drohne (1) nach einem der Ansprüche 1 und 2, **dadurch gekennzeichnet, dass** sie mindestens ein Paar von Profilplatten (8) fotovoltaischer Zellen (3), die von den Tragflügeln unterschiedlich sind, umfasst, wobei die Profilplatten jedes Paars auf dem Rumpf (2) gekoppelt und symmetrisch auf jeder Seite des Rumpfs verteilt sind, und dadurch, dass jede Profilplatte ein gewölbtes Profil aufweist, das bei einer vorbestimmten Fluggeschwindigkeit und Flughöhe der fliegenden Drohne einen Auftrieb aufweist, der geeignet ist, um das Gewicht der Profilplatte auszugleichen, wenn der Einfallswinkel gleich null ist.

4. Fliegende Drohne (1) nach Anspruch 3, **dadurch gekennzeichnet, dass** das Paar oder die Paare von Profilplatten (8) auf dem Rumpf (2) bezüglich des ersten Tragflügels (4) und des zweiten Tragflügels (5) höhenversetzt sind.

5. Fliegende Drohne (1) nach einem der Ansprüche 3 und 4, **dadurch gekennzeichnet, dass** sie zwei unterschiedliche Paare von Profilplatten (8) mit fotovoltaischen Zellen (3) der Tragflügel umfasst, darunter ein vorderes Paar und ein hinteres Paar,
und dadurch, dass:
- das vordere Paar zwischen dem zweiten Tragflügel (5) und dem ersten Tragflügel (4), der auf einem vorderen Ende des Rumpfs (2) liegt, liegt;
- das hintere Paar zwischen dem zweiten Tragflügel und einem hinteren Ende des Rumpfs liegt.

6. Fliegende Drohne (1) nach einem der vorstehenden Ansprüche, **dadurch gekennzeichnet, dass** der Rumpf (2) ein Fach (9) für eine Nutzlast umfasst, das an einem vorderen Ende des Rumpfs, vor den Tragflügeln, liegt.

7. Fliegende Drohne (1) nach einem der vorstehenden Ansprüche, **dadurch gekennzeichnet, dass** sie mindestens eine untere Fläche umfasst, die fotovoltaische Zellen (3) trägt.

## Claims

1. Drone (1) comprising:
- a fuselage (2), the upper face of the fuselage being covered with photovoltaic cells (3);
- means of propulsion powered at least by electric storage batteries and/or photovoltaic cells (3);
- a first aerofoil (4) defined by a wingspan and by a surface area of the upper face, the upper face of the first aerofoil being covered with photovoltaic cells;
- a second aerofoil (5) offset along the fuselage and in height in relation to the first aerofoil, the upper face of the second aerofoil being covered with photovoltaic cells,
**characterised in that** the second aerofoil (5) has:
- a wingspan identical to that of the first aerofoil;
- an upper face with a surface area identical to that of the first aerofoil,
and **in that** the fuselage (2) has a transversal section taking the form of an isosceles trapezoid of which the smallest base is formed by the upper face of the fuselage from which extend the lateral faces of the fuselage, the lateral faces of the fuselage being covered with photovoltaic cells (3).

2. Drone (1) according to claim 1, **characterised in that** the second aerofoil (5) is coupled on the fuselage (2) by the intermediary of a linking arm (6) with a V shape, the second aerofoil being located above the fuselage.

3. Drone (1) according to any of claims 1 and 2, **characterised in that** it comprises at least one pair of profiled plates (8) of photovoltaic cells (3) separate from the aerofoils, the profiled plates of each pair being coupled on the fuselage (2) and symmetrically distributed on each side of the fuselage,
and **in that** each profiled plate has a cambered profile that has, at a predetermined cruising speed and altitude of the drone, a lift which is able to compensate the weight of said profiled plate when the angle of incidence is zero.

4. Drone (1) according to claim 3, **characterised in that** the pair or pairs of profiled plates (8) are offset in height on the fuselage (2) in relation to the first aerofoil (4) and to the second aerofoil (5).

5. Drone (1) according to any of claims 3 and 4, **characterised in that** it comprises two pairs of profiled plates (8) of photovoltaic cells (3) separate from the aerofoils, of which one front pair and one rear pair,
and **in that**:
- the front pair is located between the second aerofoil (5) and the first aerofoil (4) located on one front end of the fuselage (2);
- the rear pair is located between the second aerofoil and a rear end of the fuselage.

6. Drone (1) according to any preceding claim, **characterised in that** the fuselage (2) comprises a compartment (9) for a payload located at a front end of the fuselage, in front of the aerofoils.

7. Drone (1) according to any preceding claim, **characterised in that** it comprises at least one lower face carrying photovoltaic cells (3).
